# EUROPEAN PATENT SPECIFICATION

(11) **EP 3 550 298 B1**
(45) Date of publication and mention of the grant of the patent: **11.11.2020**
(21) Application number: 19167776.4
(22) Date of filing: 23.05.2008
(51) Int. Cl.: G01N 30/60, B01L 3/00

(54) **METHOD AND DEVICE FOR THE DISTRIBUTION OF SAMPLE AND CARRIER LIQUID ACROSS A MICRO-FABRICATED SEPARATION CHANNEL**
VERFAHREN UND VORRICHTUNG ZUR VERTEILUNG EINER PROBE UND TRÄGERFLÜSSIGKEIT ÜBER EINEN MIKROSTRUKTURIERTEN TRENNKANAL
MÉTHODE ET DISPOSITIF POUR LA DISTRIBUTION D'ÉCHANTILLON ET DE FLUIDE PORTEUR SUR UN CANAL DE SÉPARATION MICRO-FABRIQUÉ

(30) Priority: 23.05.2007 WO PCT/EP2007/055008
(43) Date of publication of application: 09.10.2019
(62) Divisional of application: 08759970.0
(73) Proprietor: Pharmafluidics NV, 9052 Gent (Zwijnaarde) (BE)
(72) Inventor: Desmet, Gert, 1982 Elewijt (BE)
(74) Representative: De Clercq & Partners

(56) References cited:
- US-A- 6 156 273
- EGHBALI HAMED, DE MALSCHE WIM, CLICQ DAVID , GARDENIERS HAN , DESMET GERT: "Pressure-driven Chromatography in Perfectly Ordered Pillar Array Columns", LC-GC EUROPE , 1 April 2007 (2007-04-01), pages 1-11, XP002496763, Retrieved from the Internet: URL:www.lcgceurope.com [retrieved on 2008-09-11]
- DE PRA M; KOK W TH; GARDENIERS J G E; DESMET G; EELTINK S; VAN NIEUWKASTEELE J W; SCHOENMAKERS P J: "Experimental Study on Band Dispersion in Channels Structured with Micropillars", ANALYTICAL CHEMISTRY, vol. 78, no. 18, 15 September 2006 (2006-09-15), pages 6519-6525, XP002496764, AMERICAN CHEMICAL SOCIETY
- DE SMET J; GZIL P; VERVOORT N; VERELST H; BARON G V; DESMET G: "Influence of the Pillar Shape on the Band Broadening and the Separation Impedance of Perfectly Ordered 2-D Porous Chromatographic Media", ANALYTICAL CHEMISTRY, vol. 76, no. 13, 19 May 2004 (2004-05-19), - 1 July 2004 (2004-07-01), pages 3716-3726, XP002496765, AMERICAN CHEMICAL SOCIETY

## Description

### Technical field

The present invention relates to the field of liquid chromatography. The invention provides a device and method for the distribution of sample and carrier liquid across a separation channel.

### Background

In the art of liquid chromatography, more and more devices are being developed that make use of microfabricated separation channels arranged on the surface of a polymer, silicon or glass wafer. Using etching techniques, said microfabricated separation channels usually have a flat-rectangular cross-section, i.e. are much wider than deep or are much deeper than wide.

To perform and detect a liquid chromatographic separation, said microfabricated separation channels are coupled to a sample injector and to a detector device. Traditionally, this coupling is ensured using a cylindrical connection capillary. The technological challenge surfacing here is that the liquid coming from a round tubing with limited diameter should be spread uniformly over the cross-section of said microfabricated separation channel without creating excessive band broadening or axial dispersion. Similarly, it is also important that at the end of the separation channel a distribution zone is arranged to make the transition between the flow in the flat-rectangular separation channel and the circular tubing needed to lead the sample towards an off-chip detector. If performing liquid chromatography, this transition should occur with a minimum of band broadening. One of the general engineering rules that can be used for the design of these flow distribution structures is that they should have a small total volume, for the band broadening or axial dispersion of a device is generally proportional to its volume.

With this in mind, a solution to disperse the liquid across a microchannel proposed in Sant el al. (2006, Reduction of End Effect-Induced Zone Broadening in Field-Flow Fractionation Channels, Anal. Chem., 2006, 78, 7978-7985, and making use of a triangular distribution region with an opening angle between 60 and 90 degrees, has the clear drawback that it would occupy a too large volume if the ratio of separation channel width to inlet channel width is large. For example, if the separation channel would be 1 cm wide, the length of the distribution triangle in the case of 90 degree opening angle a would also have to be 1 cm. The continuously bifurcating channel inlet proposed in US patent N° 6,156,273 also makes use of such a diverging channel inlet or outlet.

There is a need in the art for providing a device for the distribution of sample and carrier liquid across a micro-fabricated separation channel, which overcomes at least some of the above-indicated drawbacks.

### Summary

The present invention provides a device according to claim 6 for the distribution of sample and carrier liquid in a micro-fabricated separation channel, wherein dispersion or permeability of the sample and carrier liquid across said separation channel is improved. In particular, the invention provides a device in which flow distribution zones are designed, wherein the lateral dispersion or permeability is promoted so as to become larger than the axial dispersion or permeability. Given that the incoming liquid needs to be spread in the lateral direction across the channel cross-section, such design is much more advantageous. It is noted that the flow distribution structures proposed in US patent 6,156,273 and Sant et al. (2006) have a lateral dispersion that is smaller than their axial dispersion.

Thereto, in all embodiments according to the present invention, a device is provided wherein flow distribution regions are developed that are filled over their entire depth, with an array of micro-fabricated pillars having a shape, size and positioning pattern selected such that said flow distribution region has a ratio of transversal to axial permeability of at least 2. Further aspects of the device are defined in claims 7-10.

This permeability ratio can for example be calculated using computational fluid dynamics software to calculate the pressure drop of a flow progressing through the distribution region in the axial direction and comparing that with the pressure drop of a flow progressing through the distribution region in the transversal direction with the same mean velocity. The ratio of both pressure drops is then the inverse of the permeability ratio.

A mathematical definition of permeability is given by Eq. (7) in SMET ET AL, "Influence of the Pillar Shape on the Band Broadening and the Separation Impedance of Perfectly Ordered 2-D Porous Chromatographic Media", Analytical Chemistry 2004, 76, 3716-3726, XP002496765.

EGHBALI ET AL: "Pressure-driven Chromatography in Perfectly Ordered Pillar Array Columns", LC-GC Europe, [www.chromatographyonline.com], 1 April 2007, XP002496763, discloses a method and a device according to the preamble of claim 1, resp. the preamble of claim 6.

### Description of the drawings

**Figure 1a** is a top view of a separation channel being arranged with one of the flow distribution regions according the present invention.
**Figure 1b** illustrates examples of micro-pillar shapes with a suitable lateral width to axial width ratio.
**Figure 2** is a top view of one of the flow distribution regions according the present invention, consisting of pillars with a size and/or inter-pillar distance that varies in the lateral direction.
**Figure 3** is a longitudinal cross-sectional view of one of the flow distribution regions according the present invention, wherein at least one part of the flow distribution region is etched to a lesser depth than said separation channel.
**Figure 4** is a longitudinal cross-sectional view of a device according to the present invention wherein a flow distribution region is arranged on a surface different from the surface carrying the separation channel.
**Figure 5** is a longitudinal cross-sectional view of a device according to the present invention wherein two different flow distribution regions are connected to different inlet reservoirs.
**Figure 6a****-b** illustrate a top view of one of the flow distribution regions according the present invention having parallel running separation walls and connected to different (Fig 6a) inlet or (Fig 6b) outlet channels.

### Detailed description of the invention

The present invention relates to a flow distribution region designed to spread a liquid uniformly across the lateral width of a flat-rectangular separation channel containing a separation medium. Said separation medium can be another micro-pillar array, a bead packing, a monolithic support or any other suitable chromatographic medium.

The terms *"distribution"* and *"dispersion"* are used herein in some embodiments as synonyms and refer to the spatial property of being scattered about over an area or volume.

The term *"permeability'* as used herein refers to the rate of flow of a liquid through a material, preferably across a micro-fabricated separation channel as defined herein.

In a first embodiment the invention provides a chromatographic separation device comprising a first substrate body carrying a micro-fabricated separation channel recessed on one of its surfaces and covered by a second substrate body, both perforated with the necessary connection-holes for the supply and withdrawal of the sample and mobile phase liquid, characterized therein that said micro-fabricated separation channel is preceded or succeeded by a flow distribution region that is filled from bottom to top with an array of micro-fabricated pillars having a shape, size and positioning pattern selected such that said flow distribution region has a ratio of transversal to axial permeability of at least 2. Preferably, the invention relates to a chromatographic separation device comprising a first substrate body carrying a micro-fabricated separation channel recessed on one of its surfaces and covered by a second substrate body, whereby said first and said second substrate body are both perforated with inlet and outlet connection-holes for the supply and withdrawal of a sample and carrier liquid, characterized in that said micro-fabricated separation channel is preceded or succeeded by a flow distribution region that is filled with an array of micro-fabricated pillars, whereby said pillars have a shape, size and positioning pattern selected such that said flow distribution region has a ratio of transversal to axial permeability of at least 2.

In a preferred embodiment, said flow distribution region has a substantially uniform lateral width, said width being equal to the width of said separation channel.

In another embodiment, a device is provided wherein said micro-fabricated pillars have a diamond-like or ellipsoidal shape. Preferably said micro-fabricated pillars have a ratio of lateral width to axial width that is larger than 3/2.

In a preferred embodiment, the invention relates to a device wherein said micro-fabricated pillars are arranged in different zones of different pillar sizes, whereby said different zones are arranged in a substantially monotonic order from the zone containing the smallest pillars to the zone containing the largest pillars, and whereby the zone containing the largest pillars is arranged closest to the inlet or outlet connection hole of said substrate body.

Even more preferred, a device is provided wherein said micro-fabricated pillar zone having the largest pillars is adjacent to an open zone devoid of pillars. Said open zone preferably has a width of 1 to 20 µm.

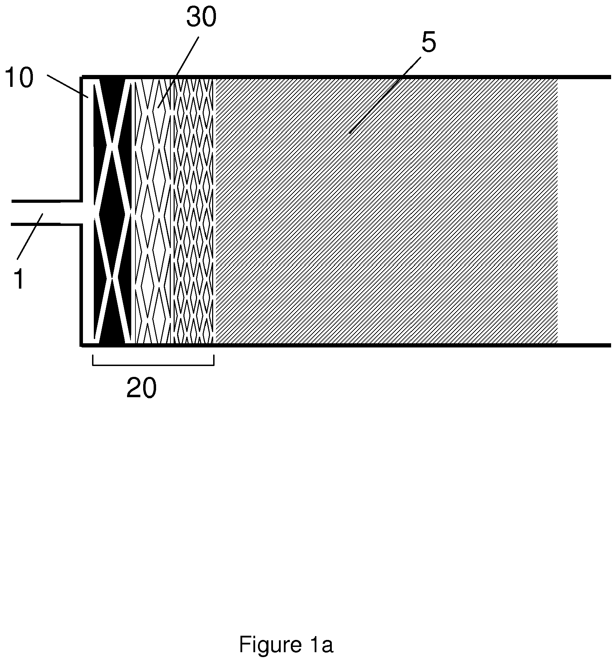

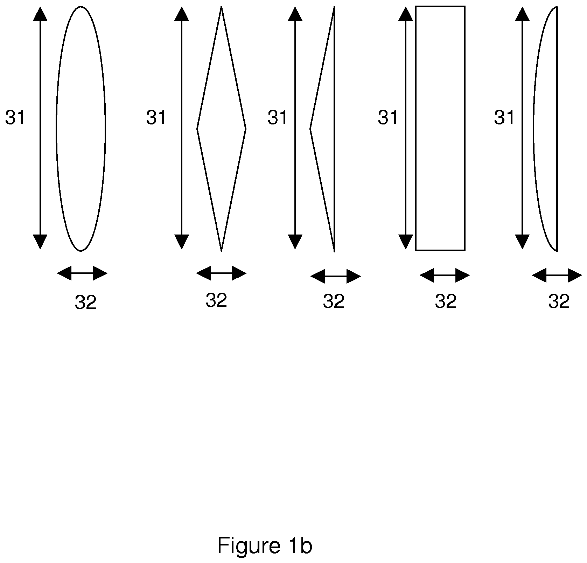

**Fig. 1a** shows an embodiment of a flow distribution region according the present invention and preceding a separation channel filled with a separation medium 5, comprising a short open region 10, constituting a flow domain wherein the resistance against the flow in the lateral direction is minimal, preferably 1 to 10 µm wide and being directly connected to the inlet orifice 1, followed by a flow distribution region 20 according to the present invention comprising micro-machined pillars 30 having a ratio of lateral width 31 to axial width 32 **(****Fig. 1b****)** that is larger than 3/2 and sufficiently closely packed to induce a lateral permeability that is at least 2 times larger than the axial permeability. In a preferred embodiment, said micro-machined pillars are arranged in order of decreasing size, with the largest pillars closest to the inlet orifice 1 of the substrate body carrying said separation channel. At the channel outlet, the different regions making up the flow distribution regions should be arranged in an opposite order, starting with the smallest flow distribution pillars and ending with the open region.

**Fig. 1b** shows a top view of a number of the possible micro-fabricated pillar shapes that can be effective for use in the flow distribution region(s) according to the present invention. The terms "micro-fabricated" or micro-machined are used herein as synonym. Methods to produce the desired micro-pillars are well-known to those skilled in the art of micromachining, and are for example Bosch etching or LIGA replication. Substrates suitable to produce the micro-pillars are for example glass wafers or silica wafer. The terms "micro-pillar" or "pillar" as used herein refer to structures that have been fabricated using a micromachining technique.

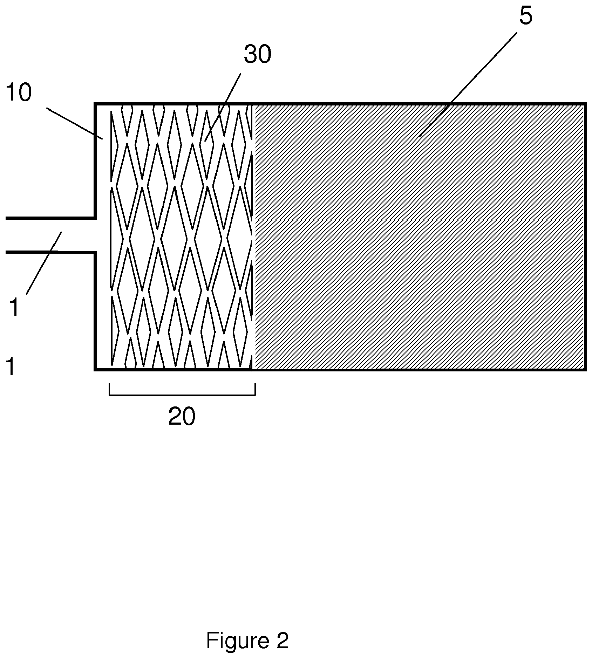

In another embodiment, the invention provides a device wherein the size and the inter-pillar distance of said micro-pillars is varied in the lateral direction. To promote a further good lateral distribution of the liquid, it is also one of the aspects of the present invention to provide a pattern of pillars with a size and/or inter-pillar distance that varies in the lateral direction so as to have a flow distribution region having a lower flow resistance in the lateral channel parts that are most remote of the inlet and/or outlet orifices. Such embodiment is for instance illustrated on **Fig. 2****.**

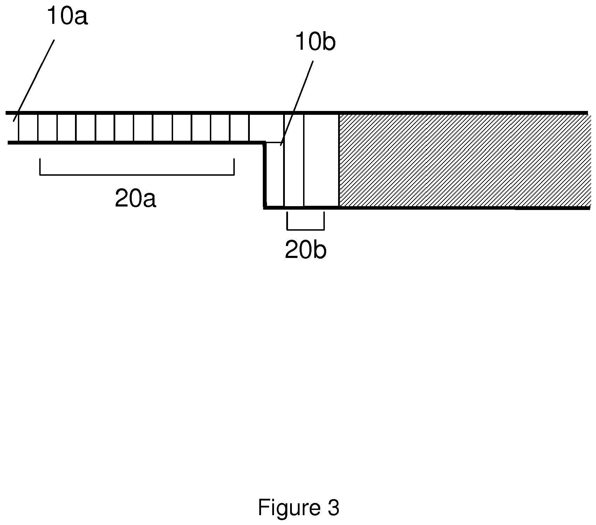

In yet another preferred embodiment, at least one part of the flow distribution region has a lesser depth than said separation channel, i.e. it is etched to a lesser depth than said separation channel. **Fig. 3** shows such an embodiment, wherein the open region 10a and a first part of the flow distribution region 20a is etched to a significantly lesser depth than the separation channel containing the separation medium 5 and the second part of the flow distribution region 20b, preferably also preceded by an open region 10b. The advantage of this embodiment is that a further reduction of the volume of the flow distribution region is created. In some embodiments according to the present invention, said deeper etched second part 20b can be omitted. In some case however, a particular advantage of deeper etched second part 20b of said flow distribution can be obtained by selecting the pillar sizes and inter-pillar dimensions such that the axial permeability of said second part is very low. This will help to induce a convective flow in the open region 10b that runs essentially in the downward direction, hence promoting the mixing across the depth of the separation channel.

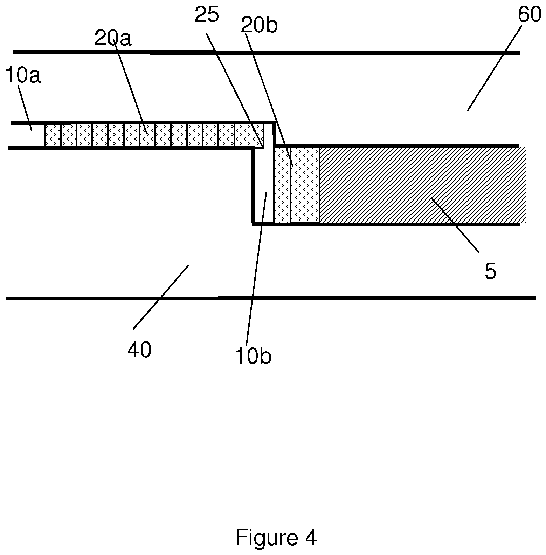

In another embodiment, the invention provides a device, wherein at least one part of the flow distribution region is arranged on a different surface than the surface carrying said separation channel. The present invention is not limited to flow distribution regions that are arranged on the same surface as the surface carrying said separation channel. As represented in **Fig. 4****,** the use of a perpendicularly etched connection channel 25 allows at least a part of the flow distribution region 20a to be arranged on either the surface of the substrate body 40 carrying the separation channel filled with the separation medium 5 (opposite to the surface carrying the separation channel), or on one of the surfaces of the substrate body 60 used to close off the separation channel. The advantage of these embodiments is that the perpendicular running connection channel 25 will induce a perpendicular flow to the separation channel, hence promoting mixing in the depth of the channel.

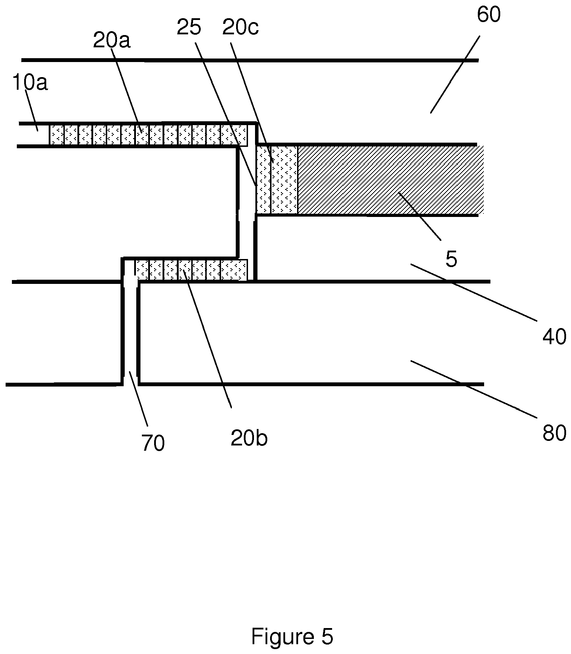

In another embodiment according to the present invention, a device may be provided wherein at least two different flow distribution regions are present at a different surface and are connected to a different liquid reservoir. Multiple inlet flows coming from different fluid reservoirs can be used. For example, as represented on **Fig. 5****,** one inlet flow is provided that feeds a first distribution region 20a, and a second inlet flow is provided that feeds a second distribution region 20b, and that enters the separation device via a second inlet orifice 70 machined in a third substrate 80 used to close off the second distribution region 20b **(****Fig. 5****).** The advantage of this embodiment is that the sample to be separated can be sent through a flow distribution region that is smaller -hence creating less band broadening- than the flow distribution region used for the main mobile phase flow or carrier fluid. Both separate inlet flows can be organized alternately or simultaneously.

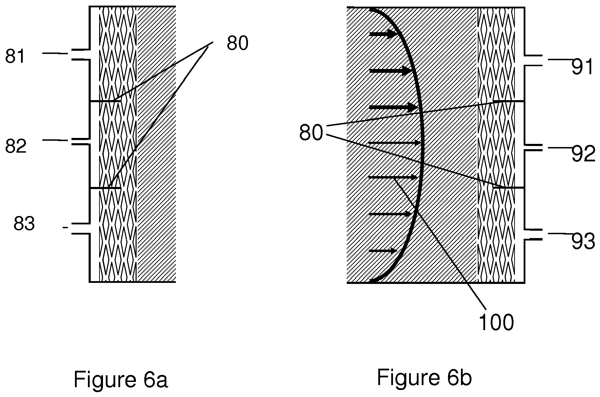

In yet another embodiment according to the present invention, a device is provided, wherein said flow distribution region is provided with one or more impermeable thin walls, which at least partly divide said flow distribution regions in two or more sections, said walls being provided parallel with the mean flow direction, and wherein preferably said sections are each connected to a different in- or outlet channel. For instance, the flow distribution region is at least partly divided using n impermeable thin walls 800, n being larger than 1, running parallel with the mean flow direction and hence preventing the communication between different lateral parts of the flow distribution region. **Fig. 6a** illustrates how this approach can be used to feed the sample to the central part of the channel only, using separate feeding channels 81, 82 and 83. **Fig. 6b** illustrates how this approach can be used to feed the liquid running through the central part of the channel exclusively to the detector device using a first outlet channel 91, while the liquid flowing closest to the channel side walls is evacuated to the waste using a second and a third outlet channel 92 and 93. Arranging said flow dividing impermeable walls into the flow distributor region is especially advantageous because the flow distributor will anyhow also limit the band broadening induced by the transition between the broad separation channel and the narrow in- and outlet channels and also because the high flow resistance of the distributor regions according to the present invention allows alleviating the influence of differences in flow resistance among the parallel inlet channels or among the parallel outlet channels by making the flow resistance of said parallel inlet and outlet channels negligible compared to the flow resistance of the flow distributor region.

Limiting the injection and detection of species to the central region of the channel can be expected to be very advantageous if the flow distributing device itself functions improperly and leads to a warped velocity profile 100. In this case it would be advantageous to only inject and/or detect in the central part of the channel, where the warp of the velocity profile will anyhow be much smaller than near the side-walls. It will also be very advantageous to circumvent the side-wall dispersion problem described in Broeckhoven and Desmet (Journal of Chromatography A, 1172 (2007), 25-39).

The present invention further relates to a method for controlling dispersion and/or permeability of a sample and carrier liquid across a micro-fabricated separation channel according to claim 1. Further aspects of the method are defined in claims 2-5.

Top view CCD-camera images can be used for comparing the band broadening obtained with a flow distribution region according to the present invention and being composed of diamond pillars with a lateral width that is 10 times larger than the axial width and therefore having a ratio of transversal to axial dispersion larger than two with the band broadening obtained in a continuously bifurcating inlet system as for example disclosed in US patent N° 6,156,273. The band in the device according to the invention is clearly narrower and less distorted than the band in the prior art device. The distortions of the latter band are caused by the fact that any band distortion originating from a difference in flow resistance, caused by inevitable small etching errors, between the branches of a bifurcating channel system can not be corrected in the remainder of the inlet system since the different branches of the bifurcating inlet are not transversally interconnected. The flow distributors according to the present invention on the other hand are designed such that they promote lateral mixing and therefore allow the immediate correction, through lateral mixing, of small band distortions.

## Claims

1. A method for controlling dispersion and/or permeability of a sample and carrier liquid across a micro-fabricated separation channel, comprising providing in the front of, or in the back of said micro-fabricated separation channel a flow distribution region that is filled with an array of micro-fabricated pillars and having an inlet connection-hole, respectively an outlet connection-hole for the supply , respectively the withdrawal of said sample and carrier liquid to and from said micro-fabricated separation channel, said method comprising inducing a lateral permeability that is larger than an axial permeability, **characterized in that** said pillars have a shape, size and positioning pattern selected such that said flow distribution region provides a ratio of lateral to axial permeability of at least 2, the incoming liquid being spread in the lateral direction across the channel cross-section.

2. Method according to claim 1 wherein the method further comprises providing a pattern of pillars with a size and/or inter-pillar distance that varies in the lateral direction so as to have a flow distribution region having a lower flow resistance in the lateral parts that are most remote of the inlet or outlet connection-hole.

3. Method according to any of the preceding claims wherein said flow distribution region has a uniform lateral width that is equal to the width of said separation channel.

4. Method according to any of the preceding claims wherein said micro-fabricated pillars have a diamond-like or ellipsoidal shape.

5. Method according to any of the preceding claims wherein said micro-fabricated pillars have a ratio of lateral width to axial width that is larger than 3/2.

6. A device comprising a flow distribution region to spread a liquid uniformly across the lateral width of a flat-rectangular separation channel containing a separation medium , the flow distribution region located in front of said separation channel, **characterized in that** said flow distribution region is filled from bottom to top with an array of micro-fabricated pillars having a shape, size and positioning pattern selected such that said flow distribution region has a ratio of lateral to axial permeability of at least 2, the incoming liquid being spread in the lateral direction across the channel cross-section.

7. Device according to claim 6 wherein said flow distribution region has a uniform lateral width that is equal to the width of said separation channel.

8. Device according to claim 6 or 7 wherein said micro-fabricated pillars have a diamond-like or ellipsoidal shape.

9. Device according to any of claims 6 to 8 wherein said micro-fabricated pillars have a ratio of lateral width to axial width that is larger than 3/2.

10. Device according to any of claims 6 to 9., wherein the separation medium is a chromatographic medium.

## Patentansprüche

1. Verfahren zum Steuern von Dispersion und/oder Permeabilität einer Probe und Trägerflüssigkeit über einem mikrostrukturierten Trennkanal, umfassend:
Bereitstellen einer Flussverteilungsregion, die mit einer Gruppierung von mikrostrukturierten Säulen gefüllt ist und ein Einlassverbindungsloch und ein Auslassverbindungsloch zur Zuführung beziehungsweise Austragung der Probe und Trägerflüssigkeit zu und von dem mikrostrukturierten Trennkanal aufweist, vor oder hinter dem mikrostrukturierten Trennkanal, wobei das Verfahren Induzieren einer lateralen Permeabilität umfasst, die größer als eine axiale Permeabilität ist,
**dadurch gekennzeichnet, dass** die Säulen eine Gestalt, Größe und ein Positionierungsmuster haben, die so ausgewählt sind, dass die Flussverteilungsregion ein Verhältnis von lateraler zu axialer Permeabilität von mindestens 2 bereitstellt, wobei die eingehende Flüssigkeit in der lateralen Richtung über den Kanalquerschnitt ausgebreitet wird.

2. Verfahren nach Anspruch 1, wobei das Verfahren des Weiteren Bereitstellen eines Musters von Säulen mit einer Größe und/oder einem Abstand zwischen den Säulen umfasst, die bzw. der in der lateralen Richtung variiert, um so eine Flussverteilungsregion mit einem geringeren Flusswiderstand in den lateralen Teilen zu erhalten, die sich am weitesten von dem Einlass- oder Auslassverbindungsloch entfernt befinden.

3. Verfahren nach einem der vorhergehenden Ansprüche, wobei die Flussverteilungsregion eine gleichförmige laterale Breite hat, die gleich der Breite des Trennkanals ist.

4. Verfahren nach einem der vorhergehenden Ansprüche, wobei die mikrostrukturierten Säulen eine rautenförmige oder elliptische Gestalt aufweisen.

5. Verfahren nach einem der vorhergehenden Ansprüche, wobei die mikrostrukturierten Säulen ein Verhältnis von lateraler Breite zu axialer Breite haben, das größer als 3/2 ist.

6. Vorrichtung, umfassend eine Flussverteilungsregion zum gleichförmigen Ausbreiten einer Flüssigkeit über die laterale Breite eines flach-rechteckigen Trennkanals, der ein Trennmedium enthält, wobei sich die Flussverteilungsregion vor dem Trennkanal befindet, **dadurch gekennzeichnet, dass** die Flussverteilungsregion von unten nach oben mit einer Gruppierung von mikrostrukturierten Säulen gefüllt ist, die eine Gestalt, Größe und ein Positionierungsmuster aufweisen, die so ausgewählt sind, dass die Flussverteilungsregion ein Verhältnis von lateraler zu axialer Permeabilität von mindestens 2 hat, wobei die eingehende Flüssigkeit in der lateralen Richtung über den Kanalquerschnitt ausgebreitet wird.

7. Vorrichtung nach Anspruch 6, wobei die Flussverteilungsregion eine gleichförmige laterale Breite hat, die gleich der Breite des Trennkanals ist.

8. Vorrichtung nach Anspruch 6 oder 7, wobei die mikrostrukturierten Säulen eine rautenförmige oder elliptische Gestalt aufweisen.

9. Vorrichtung nach einem Ansprüche 6 bis 8, wobei die mikrostrukturierten Säulen ein Verhältnis von lateraler Breite zu axialer Breite haben, das größer als 3/2 ist.

10. Vorrichtung nach einem der Ansprüche 6 bis 9, wobei das Trennmedium ein Chromatographiemedium ist.

## Revendications

1. Procédé de contrôle de la dispersion et/ou de la perméabilité d'un échantillon et d'un liquide porteur à travers un canal de séparation microfabriqué, comprenant la mise en place, à l'avant ou à l'arrière dudit canal de séparation microfabriqué, d'une région de distribution d'écoulement qui est remplie avec un réseau de piliers microfabriqués et ayant un trou de raccordement d'entrée, respectivement un trou de raccordement de sortie, la fourniture, respectivement le retrait desdits échantillon et liquide porteur audit et depuis ledit canal de séparation microfabriqué, ledit procédé comprenant l'induction d'une perméabilité latérale qui est plus grande qu'une perméabilité axiale,
**caractérisé en ce que** lesdits piliers ont une forme, une taille et un motif de positionnement sélectionnés de telle sorte que ladite région de distribution d'écoulement fournit un rapport entre perméabilité latérale et axiale d'au moins 2, le liquide entrant étant réparti dans la direction latérale à travers la section transversale de canal.

2. Procédé selon la revendication 1, le procédé comprenant en outre la mise en place d'un motif de piliers avec une taille et/ou une distance entre piliers qui varient dans la direction latérale de manière à avoir une région de distribution d'écoulement ayant une résistance inférieure à l'écoulement dans les parties latérales qui sont les plus distantes du trou de raccordement d'entrée ou de sortie.

3. Procédé selon l'une quelconque des revendications précédentes dans lequel ladite région de distribution d'écoulement a une largeur latérale uniforme qui est égale à la largeur dudit canal de séparation.

4. Procédé selon l'une quelconque des revendications précédentes dans lequel lesdits piliers microfabriqués ont une forme de type diamant ou ellipsoïde.

5. Procédé selon l'une quelconque des revendications précédentes dans lequel lesdits piliers microfabriqués ont un rapport entre largeur latérale et largeur axiale qui est supérieur à 3/2.

6. Dispositif comprenant une région de distribution d'écoulement pour répartir un liquide uniformément à travers la largeur latérale d'un canal de séparation rectangulaire plat contenant un milieu de séparation, la région de distribution d'écoulement étant située à l'avant dudit canal de séparation, **caractérisé en ce que** ladite région de distribution d'écoulement est remplie de bas en haut avec un réseau de piliers microfabriqués ayant une forme, une taille et un motif de positionnement sélectionnés de telle sorte que ladite région de distribution d'écoulement présente un rapport entre perméabilité latérale et axiale d'au moins 2, le liquide entrant étant réparti dans la direction latérale à travers la section transversale de canal.

7. Dispositif selon la revendication 6 dans lequel ladite région de distribution d'écoulement a une largeur latérale uniforme qui est égale à la largeur dudit canal de séparation.

8. Dispositif selon la revendication 6 ou 7 dans lequel lesdits piliers microfabriqués ont une forme de type diamant ou ellipsoïde.

9. Dispositif selon l'une quelconque des revendications 6 à 8 dans lequel lesdits piliers microfabriqués ont un rapport entre largeur latérale et largeur axiale qui est supérieur à 3/2.

10. Dispositif selon l'une quelconque des revendications 6 à 9, dans lequel le milieu de séparation est un milieu chromatographique.
